Europäisches Patentamt

European Patent Office

Office européen des brevets

(11) Publication number: **0 234 181**
**A1**

## (12) EUROPEAN PATENT APPLICATION

(21) Application number: **87100007.1**

(22) Date of filing: **02.01.87**

(51) Int. Cl.4: **G06F 13/16** , **G06F 13/42** , **G06F 13/12**

(30) Priority: **06.02.86 US 826649**

(43) Date of publication of application:
**02.09.87 Bulletin 87/36**

(84) Designated Contracting States:
**DE FR GB IT**

(71) Applicant: **International Business Machines Corporation**
**Old Orchard Road**
**Armonk, N.Y. 10504(US)**

(72) Inventor: **Kulpa, William Gary**
**11502 Titian Drive**
**Austin Texas 78758(US)**
Inventor: **Mathis, Joseph Richard**
**725 Shady Hollow Drive**
**Georgetown Texas 78628(US)**

(74) Representative: **Hobbs, Francis John**
**IBM United Kingdom Limited Intellectual**
**Property Department Hursley Park**
**Winchester Hampshire SO21 2JN(GB)**

(54) **A data processing system.**

(57) Data is transferred between an asynchronous input/output (I/0) adapter (22) and one portion of a memory via a sequential access port (23) while a processor communicates synchronously with another portion (21a) of the memory via a conventional random access port (24).

**EP 0 234 181 A1**

FIG. 3

# A DATA PROCESSING SYSTEM

This invention relates to a data processing system.

Conventional microprocessor systems have a single address and data bus that interconnects the processor, storage, and I/0 adapters. In such a system, any movement of data into or out of storage such as by direct memory access (DMA), interferes with the instruction execution of the processor by "stealing" memory cycles. Further, the control network required in the I/0 adapter to support a DMA transfer is rather extensive and costly. One attempt to overcome performance loss due to this DMA traffic is to construct a two port storage subsystem or through the use of so-called "page and nibble" modes of the random access memories (RAMs) in which the data and instructions are stored. Although these techniques may reduce some bus interference, contention for the actual storage array still exists. One of the major problems associated with this known type of system structure is that high performance I/0 adapters monopolise the data bus during the transfer of a block of data. This type of operation will completely lock out the processor from storage access for instruction execution. Any such lock out and reduced processing capability may increase interrupt latency beyond desirable or acceptable limits.

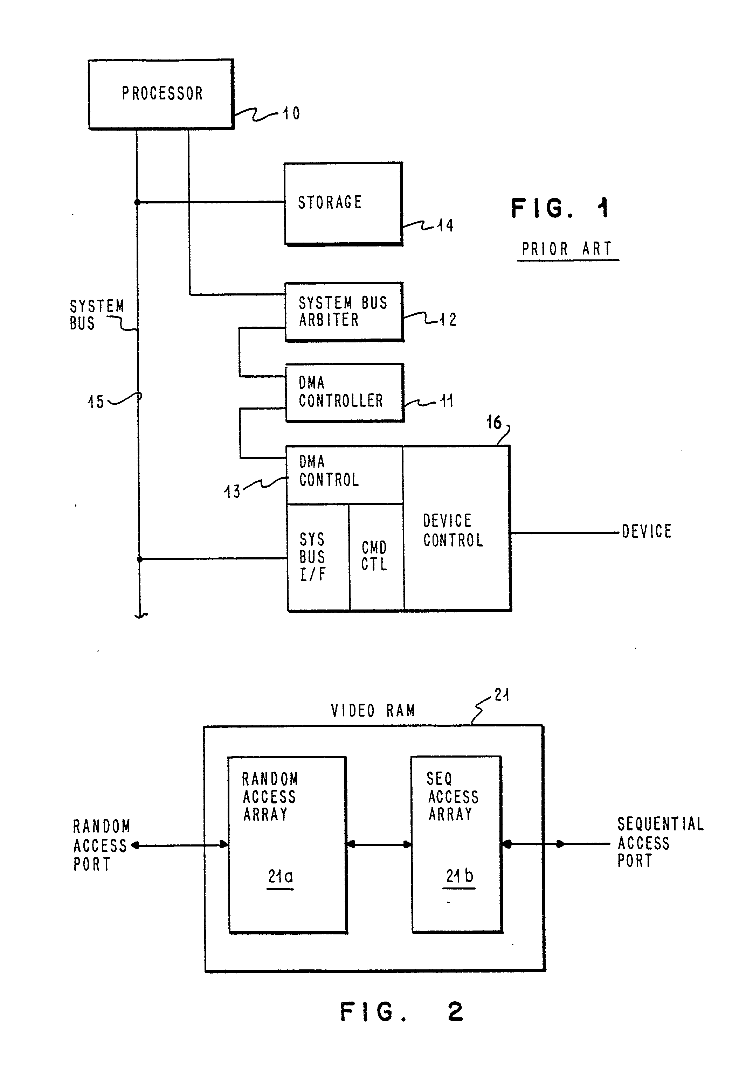

Figure 1 shows an example of a conventional micro-processor system including a processor 10. A DMA controller 11, system bus arbiter 12 and DMA control network 13 of an I/0 16 adapter are required to permit the transfer of data between a storage unit 14 and the I/0 adapter. The functions performed by these control networks are as follows:

System bus arbiter 12 provides the capability of a system element other than the processor to control the system bus 15. This action will effectively stop instruction execution by the processor.

DMA controller 11 provides the intelligent control structure required to control the system bus for storage access by an I/0 adapter. It may be packaged as part of the I/0 adapter (first party DMA) or packaged with the system logic (third party). It will request use of the system bus from the system arbiter on behalf of the I/0 adapter. Once granted usage of the bus, it will initiate a bus cycle by sequencing the bus signals appropriately. DMA controller 11 will also supply the appropriate storage address on behalf of the I/0 adapter during the transfer phase of the operation and increment or decrement the address appropriately in preparation for the next bus cycle.

The DMA control network of the I/0 adapter is required to interpret and respond to the unique signals from the DMA controller and the transfer control signals of the system bus. Either the DMA controller or the I/0 adapter interface control network will keep track of the number of transfers required to complete the operation.

The present invention seeks to provide an improved system in which interference during data transfer is virtually eliminated.

A data processing system includes a processor, a memory operatively associated with the processor, the memory comprising a first dynamic RAM portion accessible via a conventional random access port and a second portion accessible via a sequential access port, and means to transfer data between the two portions; the processor being arranged and connected to communicate synchronously with the first portion of the memory, the system being characterised, according to the invention, by further including an asynchronous input/output adapter arranged and connected to communicate with the second portion of the memory via the sequential access port.

The transfer mechanism employed in systems embodying the invention will be referred to as the Sequential Transfer Channel (STC).

The STC is based on the so-called video RAM storage technology. The video RAM is a dynamic RAM developed specifically for high function graphic displays which provides access to a word register internal to the chip through a serial port. In the display environment, the processor can have effectively unrestricted access to the storage unit through the random access port of the RAM while the display (CRT) is being refreshed through the serial port of the RAM. The "serial in" facility used to cascade video RAM's for display applications is used in a system embodying the present invention to provide the receive data path of the STC while the transmit data path is provided by the "serial out" facility. Thus, the video RAM provides two data ports, the conventional random access port of a dynamic RAM and the serial or sequential access port unique to the video RAM. Video RAM's are currently being produced by Texas Instruments, Model # TMS 4161 with planned offerings by other companies. The Texas Instrument memory is described in the "Supplement to MDS Memory Data Book 1984" in an article entitled "Dual Port Memory With High Speed Serial Access" pages 5-3 to 5-10.

How the invention can be carried out will now be described by way of example with reference to Figs. 2 to 4 of the accompanying drawings, in which:-

Fig. 2 is a schematic representation of a video RAM subsystem;

Fig. 3 is a block diagram of a system embodying the invention, in which a video RAM is disposed between a processor and an I/O adapter; and

Fig. 4 is a block diagram of another system embodying the invention, in which a group of video RAMs are disposed between a processor and a group of I/O adapters.

The general organisation of the storage subsystem for a processor -I/O adapter embodiment of this invention is similar to that of a conventional system in that it is formed by assembling the RAM modules into a parallel structure (typically 16 or 32 bits). As shown in Fig. 2, a video RAM storage subsystem can be viewed as a RAM 21 housing two independent RAMs. When viewed in this manner, the serial port takes on the attributes of a sequentially accessible parallel port. That is, the storage can be considered as two independent RAM's, one low speed random access RAM array 21a and a smaller high speed sequential access RAM array 21b.

The two arrays are effectively uncoupled during the normal read/write access of the random port and transactions on the sequential or serial port. Interaction between these two ports is limited to one transaction on the random port (system bus) to load/store the serial register from/into the random access array. With a video RAM with a 256 bit shift register, one storage cycle is required for every 256 transactions on the sequential port. Concluding from this that the interference is 1/256 or 0.39% is misleading because the sequential port can cycle much faster than the random port. Interference of 2 to 3% would be expected for a sequential port transaction that would consume 100% of the random port if it were used (in practice, the sequential port can transfer data rates 2 to 3 times that of the random port).

A sequential transfer channel is formed by connecting the data bus of the I/O adapter to the sequential access port of the video RAM. The transfer of data over this sequential transfer channel will present near zero interference to the execution of instructions by the processor or conventional DMA traffic, as compared with the lock out or reduced instruction execution in a conventional system.

Fig. 3 is a block diagram indicating the data flow for data transfers between a video RAM storage unit 21 and an I/O adapter 22 utilising a STC 23. Data is transferred between the sequential RAM port associated with portion 21b of the video RAM and the I/O control of the I/O adapter 22, without using the internal system bus 15 of the processor. Thus, the processor is not subjected to any interference during the transfer, leaving the storage unit and internal bus virtually completely available (i.e., 99.0% available) for instruction fetching, execution and DMA activity.

The device control networks of both Figures 1 and 3 are identical. The asynchronous signal from the device control network of the I/O adapter requesting data service can be connected directly to the clock of the sequential RAM interface. The assertion of the "data service request" signal (along with a static read/write) signal will effect a data transfer between the sequential RAM 21b of the video RAM 21 and the I/O adapter. The nature of the clocking mechanism of the sequential access port of the video RAM completely eliminates the requirement for any synchronising logic on this interface. The inherent sequential nature of data transfers through the sequential RAM port eliminates the need for an address counter. However, the I/O adapter is still required to maintain a transfer counter to determine when the load/store on the random access port is required or when the operation has been completed. The load/store operation on the random port can be done by hardware (requiring a system bus arbiter) through an interrupt to software.

Thus, the following elements found in a conventional system are not required with the system embodying the invention:

° DMA Controller
° System Bus Arbiter (if software loads/stores the serial register)
° DMA control network in the I/O adapter
° Synchronising logic for the actual data transfer.

Thus, no "intelligence" (beyond that required for device control) is required.

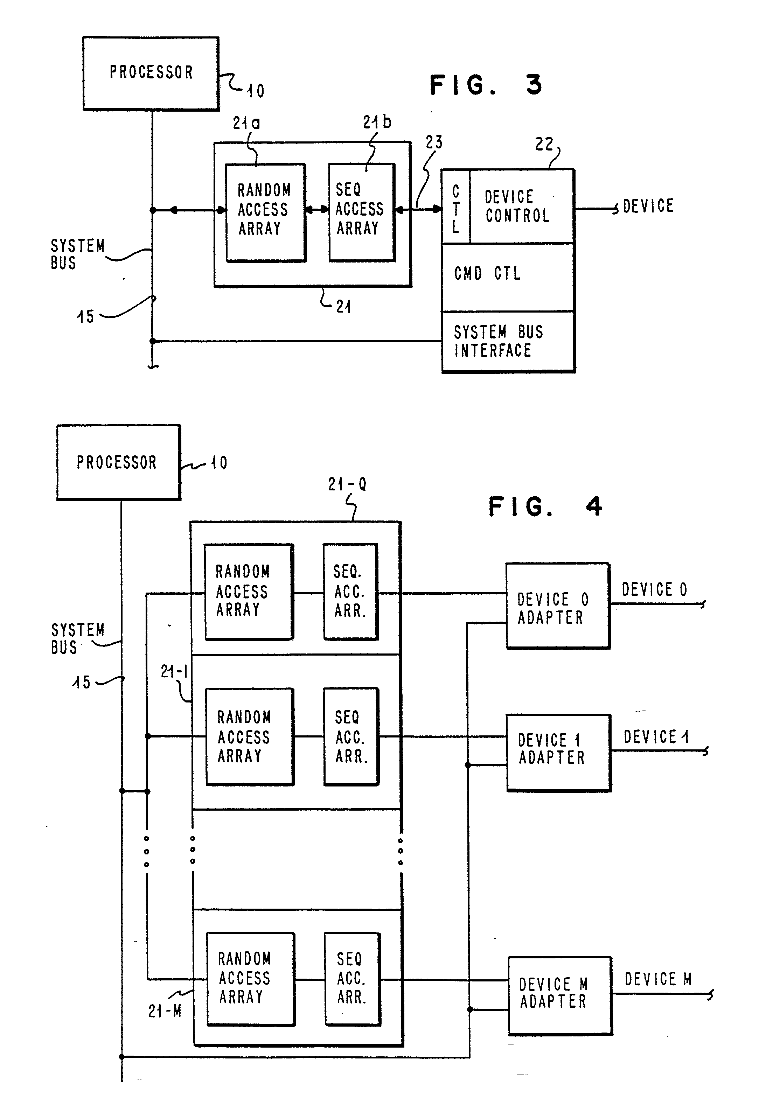

Figure 4 is a block diagram of a system utilising the STC mechanism for several I/O adapters which typically utilise DMA and where the data transfer is inherently sequential in nature and the data rates can be high enough to seriously impact the performance of the processor. Each individual input/output device is connected through its I/O adapter to its own associated video RAM 21-0, 21-1, 21-M, each similar to RAM 21 in Fig. 3, and having a random access portion and a sequential access portion.

To illustrate the advantages of reduced system interference in systems embodying the invention, consider the following example:

A conventional system with a 2 byte storage interface and a 250 NS cycle storage can sustain a maximum burst data transfer of 8 M bytes/sec. This rate is supported only if all other system activity (instruction execution and DMA traffic) were stopped.

Maximum transfer rate

$$= \frac{2 \text{ Bytes}}{\text{Storage Cycle}} \times \frac{\text{Storage Cycle}}{250 \text{ nS}}$$

$$= 8 \text{ M Bytes/Sec}$$

$$\text{Interference} = 100\%$$

A Sequential Transfer Channel with a 2 byte interface, shift register depth of 256 bits, and a clock rate of 10MHz (100 nS period) will support a data rate of:

$$\text{Data Rate} = \frac{2 \text{ Bytes}}{\text{Access}} \times 10 \text{ MHz}$$

$$= \frac{2 \text{ Bytes}}{\text{Access}} \times \frac{\text{Access}}{100 \text{ nS}}$$

$$= 20 \text{ M Bytes/sec}$$

The total interference impact to the system is calculated by dividing the amount of system bus time required by the time interval (period) between consecutive system bus requests. Assume a system bus arbitration time of 250 nS in series with the 250 nS storage cycle time.

$$\text{Request Period} = \frac{100 \text{ nS}}{\text{XFR}} \times (256 \text{ XFR/Stg Cycle})$$

$$= 25.6 \text{ µs/Stg Cycle}$$

$$\text{Interference} = \frac{250+250 \text{ nS}}{\text{Stg Cycle}} \times \frac{\text{Stg Cycle}}{25.6 \text{ µS}} \times 100\%$$

$$= 1.95\%$$

Thus, the STC of the present invention can support a data rate 2.5 times that of the system bus while presenting an interference load on the system bus of only 1.95%.

Systems embodying the invention have the following attributes and advantages:

Interference between processor instruction execution and data transfers to the I/0 adapters significantly reduced.

The amount of hardware in the base system required on behalf of the I/0 adapter is reduced.

The control logic needed to support the I/0 adapter is simplified by eliminating the synchronisation logic of the data transfer.

## Claims

1. A data processing system including a processor (10); a memory (21) operatively associated with the processor, the memory comprising a first dynamic RAM portion (21a) accessible via a conventional random access port and a second portion (21b) accessible via a sequential access port (23), and means to transfer data between the two portions; the processor being arranged and connected to communicate synchronously with the first portion of the memory via its conventional random access port; the system being characterised by further including an asynchronous input/output adapter (22) arranged and connected to communicate with the second portion of the memory via its sequential access port.

2. A data processing system as claimed in claim 1, in which the second portion of the memory comprises a shift register.

3. A data processing system as claimed in claim 2, in which the memory includes clocking means associated with the second portion of the memory.

4. A data processing system as claimed in any preceding claim, including a system bus connected to the processor and means for alternatively connecting the first portion of the memory and the input/output adapter to the system bus.

5. A data processing system as claimed in any preceding claim, which includes a plurality of memories each having a dynamic RAM portion and a sequential access portion and a plurality of input/output adapters each connected to the sequential access portion of an individual one of the memories.

PROCESSOR

— 10

STORAGE

— 14

# FIG. 1

PRIOR ART

SYSTEM
BUS

SYSTEM BUS
ARBITER

— 12

15

DMA
CONTROLLER

— 11

16

DMA
CONTROL

13

SYS
BUS
I/F

CMD
CTL

DEVICE
CONTROL

— DEVICE

VIDEO RAM

21

RANDOM
ACCESS
PORT

RANDOM
ACCESS
ARRAY

21a

SEQ
ACCESS
ARRAY

21 b

SEQUENTIAL
ACCESS
PORT

# FIG. 2

0 234 181

FIG. 3

FIG. 4

# EUROPEAN SEARCH REPORT

**European Patent Office**

Application number

EP 87 10 0007

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 562 435 (K.C. McDONOUGH et al.) <br> * Column 3, line 51 - column 5, line 4; column 13, lines 12-32; column 13, line 56 - column 14, line 16 * | 1-3 | G 06 F 13/16 <br> G 06 F 13/42 <br> G 06 F 13/12 |
| | --- | | |
| A | EP-A-0 029 331 (FUJITSU LTD) <br> * Page 3 * | 1 | |
| | --- | | |
| A | EP-A-0 013 739 (IBM) <br> * Page 40, lines 1-16 * | 1 | |
| | ----- | | |

|  |
|---|
| TECHNICAL FIELDS SEARCHED (Int. Cl.4) |
| G 09 G <br> G 06 F |

The present search report has been drawn up for all claims

| Place of search | Date of completion of the search | Examiner |
|---|---|---|
| THE HAGUE | 18-05-1987 | TIBAUX M.J.P.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82